(19) Europäisches Patentamt
European Patent Office
Office européen des brevets

(11) Veröffentlichungsnummer: **0 369 045 B1**

(12) **EUROPÄISCHE PATENTSCHRIFT**

(45) Veröffentlichungstag der Patentschrift: **03.02.93**

(51) Int. Cl.5: **C04B 35/00**, B01F 17/46

(21) Anmeldenummer: **88119004.5**

(22) Anmeldetag: **15.11.88**

(54) **Verfahren zur Herstellung von Keramischen Grünfolien.**

(43) Veröffentlichungstag der Anmeldung:
**23.05.90 Patentblatt 90/21**

(45) Bekanntmachung des Hinweises auf die Patenterteilung:
**03.02.93 Patentblatt 93/05**

(84) Benannte Vertragsstaaten:
**AT BE DE FR GB IT NL SE**

(56) Entgegenhaltungen:
**EP-A- 0 158 406**
**EP-A- 0 166 400**
**DE-A- 3 724 108**

(73) Patentinhaber: **HOECHST AKTIENGESELLSCHAFT**
**Postfach 80 03 20**
**W-6230 Frankfurt am Main 80(DE)**

(72) Erfinder: **Hermann, Hans Dieter, Dr.**
**Am Dachsbau 7**
**W-6232 Bad Soden am Taunus(DE)**
Erfinder: **Grote, Dieter**
**Lärchenweg 6**
**W-8590 Markfredwitz(DE)**
Erfinder: **Waldmann, Karl, Dr.**
**Am Rehsteig 25**
**W-6232 Bad Soden am Taunus(DE)**

**EP 0 369 045 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft die Herstellung von keramischen Grünfolien durch Vergießen und Trocknen eines Schlickers, der feinteiliges anorganisches Pigment, organische Lösungsmittel, Polyvinylbutyral, Weichmacher und Dispergiermittel enthält, wobei unter Verwendung spezieller erfindungsgemäßer Dispergiermittel keramische Grünfolien mit überraschend vorteilhaften Eigenschaften erhalten werden können, die sich durch nachfolgende thermische Behandlung in isotrope keramische Substrate umwandeln lassen.

Substrate aus keramischen Massen, beispielsweise aus Aluminiumoxid, können durch Gießen von sogenannten Schlickern hergestellt werden. Unter Schlicker wird dabei eine Aufschlämmung anorganischer Pigmente in einem organischen Lösungsmittel verstanden, welches ein polymeres Bindemittel, wie Polyvinylbutyral, und einen Weichmacher, wie z.B. einen Phthalsäureester, enthält. Dieser Schlicker wird auf ein kontinuierlich laufendes Metall- oder Kunststoffband gegossen, wobei eine konstante Schichtdicke der Gießmasse durch eine Rakel eingestellt wird. Auf dem Band wird der Schlicker getrocknet und es entsteht eine flexible Grünfolie, die sich kontinuierlich vom Band abziehen läßt. Die Grünfolie kann durch Schneiden und Stanzen leicht weiter verarbeitet werden. Anschließend werden die organischen Bestandteile durch ein spezielles Temperaturprogramm aus der Folie verdampft und diese schließlich bei hohen Temperaturen zum Substrat gesintert.

Dieses wirtschaftliche Verfahren hat jedoch eine Reihe von Nachteilen, wovon hier nur wenige besonders schwerwiegende hervorgehoben werden sollen.

Nach dem Trocknen neigt die Grünfolie zum Kleben auf dem Band, speziell auf Metallband. Zum Abziehen vom Band ist soviel Kraft erforderlich, daß die Folie gedehnt wird. Es ist bekannt, das Band mit einem Gleitmittel zu behandeln, wodurch die Haftung der Folie - allerdings oft nicht ausreichend - erniedrigt wird.

Beim Gießen des Schlickers tritt eine mehr oder weniger große Scherung auf. Dadurch werden nicht kugelförmige anorganische Teilchen, beispielsweise handelsübliches Aluminiumoxid, in Fließrichtung orientiert. Diese Orientierung wird noch verstärkt, wenn das organische Lösungsmittel/Bindemittel/Weichmachersystem als solches nicht homogen, sondern mehrphasig ist und wenn die Teilchengrößenverteilung der anorganischen Pigmente groß ist.

Alle geschilderten Effekte führen im allgemeinen dazu, daß beim Brennen und Sintern der Substrate längs und quer zur Fließrichtung unterschiedliche Schwindungen auftreten, die sich nicht reproduzierbar einstellen lassen.

Ein weiterer schwerwiegender Nachteil ist das Bestreben der anorganischen Teilchen, sich schon vor dem Trocknen in unkontrollierbarer Weise zusammen zu lagern. In den Teilchenaggregaten bilden sich kleine Hohlräume, d.h. die Teilchen sind nicht optimal dicht gepackt. Das verursacht wiederum eine hohe und schlecht reproduzierbare Schwindung der Grünfolien beim Brennen und es enstehen Anisotropien in dem resultierenden keramischen Substrat. Insgesamt führen die geschilderten Effekte dazu, daß es nicht möglich ist, Substrate mit präzisen Abmessungen durch das Gießverfahren herzustellen. Zur Herstellung von Präzisionsteilen ist es daher u.a. erforderlich, fertig gebrannte Substrate in aufwendigen Verfahren, beispielsweise mit Laserstrahlen, zu schneiden.

Es hat bisher nicht an Versuchen gefehlt, das Problem der ungleichmäßigen Schwindung und der Bildung von Substratanisotropien zu verringern. Es setzte sich u.a. die Erkenntnis durch, daß es erforderlich ist, die anorganischen Teilchen besser zu dispergieren. So werden durch mehrtägiges Mahlen des Schlickers Teilchenaggregate zerstört, jedoch entstehen beim Gießen erneut nicht optimal dichte Aggregate. Günstiger ist es, Dispergiermittel wie Fischöl, Polyethylenglykole oder Ethylenoxid-Propylenoxid-Blockcopolymere zuzusetzen und als Bindemittel Polymere mit gut dispergierenden Eigenschaften, wie z.B. Polyvinylbutyral oder Acrylat-Copolymere, zu verwenden, wobei natürlich die Forderung erfüllt sein muß, daß sich die verwendeten organischen Verbindungen vollständig aus der Grünfolie entfernen lassen. Es konnten durch solche Maßnahmen merkliche Verbesserungen in der Dimensionierung der Substrate erreicht werden, so daß sich das Gießverfahren weltweit durchgesetzt hat. Trotzdem gelingt es immer noch nicht, nach dem Gießverfahren Substrate mit exakter Dimensionierung herzustellen. Das liegt einerseits daran, daß, wie z.B. bei der Verwendung von Fischöl oder anderen ungesättigten Fettsäureestern, zwar niedrigviskose Schlicker rasch herstellbar sind, die Primärteilchen aber nicht aggregatfrei gehalten werden können, oder daß die verwendeten Dispergiermittel mit dem Lösungsmittel, dem Bindemittel und dem Weichmacher keine homogene Phase bilden. Oft müssen auch die Zusätze in so hohen Konzentrationen verwendet werden, daß das Ausbrennen der organischen Bestandteile aus der Grünfolie erheblich behindert wird.

Es wurde nun überraschenderweise gefunden, daß sich die genannten Nachteile überwinden lassen, wenn man in einem Bindemittelsystem, bestehend aus organischen Lösungsmitteln, Polyvinylbutyral, Weichmacher und Dispergiermittel, als Dispergiermittel Verbindungen einsetzt, die in ihren Molekülen

mindestens eine Struktureinheit der Formel Z,

$>N-(A)_x-(B)_yH$ (Z)

worin A und B, die verschieden sein müssen, entweder für die Oxyalkyleneinheit $-C_{3-4}H_{6-8}O-$ oder die Oxyalkyleneinheit $-C_2H_4O-$ stehen und x und y, die gleich oder verschieden sein können, jeweils eine Zahl von 1 bis 200, vorzugsweise 2 bis 50, bedeuten, enthalten.

Gegenstand der Erfindung ist daher ein Verfahren zur Herstellung von keramischen Grünfolien durch Vergießen und Trocknen eines Schlickers, der feinteiliges anorganisches Pigment, organische Lösungsmittel, Polyvinylbutyral, Weichmacher und Dispergiermittel enthält, dadurch gekennzeichnet, daß als Dispergiermittel Verbindungen eingesetzt werden, die in ihren Molekülen mindestens eine Struktureinheit der Formel Z,

$>N-(A)_x-(B)_yH$ (Z)

worin A und B, die verschieden sein müssen, entweder für die Oxyalkyleneinheit $-C_{3-4}H_{6-8}O-$ oder die Oxyalkyleneinheit $-C_2H_4O-$ stehen und x und y, die gleich oder verschieden sein können, jeweils eine Zahl von 1 bis 200, vorzugsweise 2 bis 50, bedeuten, enthalten.

Eine Ausführungsform der Erfindung besteht darin, daß die Struktureinheit der Formel Z den Formeln $Z^1$ oder $Z^2$,

$>N-(C_2H_4O)_x-(C_3H_6O)_yH$ ($Z^1$)
$>N-(C_3H_6O)_x-(C_2H_4O)_yH$ ($Z^2$)

worin x und y jeweils die Bedeutungen wie in Formel Z haben, entspricht.

Wie die der Grundformel Z entsprechenden Formeln $Z^1$ und $Z^2$ beispielhaft zeigen, stellen darin die Gruppen A und B die Oxyalkyleneinheiten $-C_3H_6O-$ oder $-C_2H_4O-$ dar, wobei A und B nicht gleich sind, d.h., die Gruppen A und B in Formel Z bilden zusammen stets blockcopolymere Strukturen bzw. stellen blockcopolymere Addukte dar.

Eine bevorzugte Ausführungsform der Erfindung besteht darin, daß das erfindungsgemäße Dispergiermittel den Formeln I und/oder II,

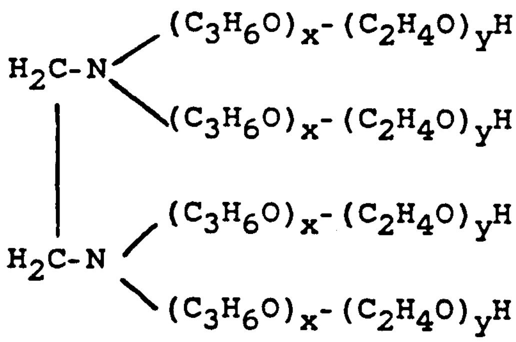

(I)

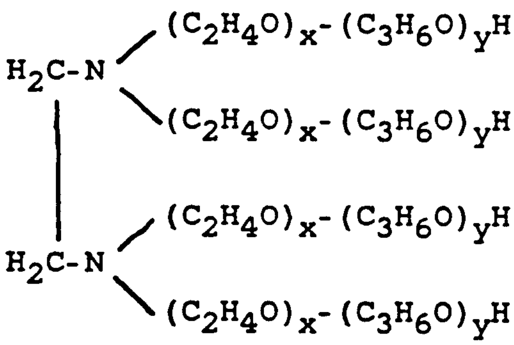

(II)

worin x und y jeweils die Bedeutungen wie in Formel Z haben, entspricht.

Weiterer Gegenstand der Erfindung sind keramische Grünfolien, hergestellt durch Vergießen und Trocknen eines Schlickers, der feinteiliges anorganisches Pigment, organische Lösungsmittel, Polyvinylbutyral, Weichmacher und als Dispergiermittel Verbindungen enthält, die in ihren Molekülen mindestens eine Struktureinheit der Formel Z enthalten.

Weiterer Gegenstand der Erfindung ist ein keramisches Substrat, hergestellt aus erfindungsgemäß erhaltenen keramischen Grünfolien durch thermische Behandlung und Sinterung, vorzugsweise durch Erhitzen und Sintern bei Temperaturen von mindestens 1600 ° C, wobei es aus isotrop verteilten anorganischen Partikeln aufgebaut ist.

Eine weitere Ausführungsform der Erfindung besteht darin, daß das erfindungsgemäße Dispergiermittel Verbindungen enthält, die durch Addition von einem oder mehreren blockcopolymer strukturierten Resten aus x Ethylenoxid-und y Propylenoxid-Einheiten oder x Propylenoxid- und y Ethylenoxid-Einheiten, wobei x und y in den blockcopolymer strukturierten Resten die Bedeutungen wie in Formel Z haben, an die Aminogruppen von primären oder sekundären Aminen, vorzugsweise aliphatischen Aminen, mit durch aliphatische $(C_1-C_{18})$-Reste substituierten Amino-N-Atomen, bzw. von primären oder primären/sekundären oder sekundären Di- oder Polyaminen, vorzugsweise aliphatischen Di- oder Polyaminen mit durch aliphatische $(C_1-C_{18})$-Reste substituierten Amino-N-Atomen oder durch mehrbindige aliphatische $(C_1-C_{12})$-Reste miteinander verbundenen Amino-N-Atomen, insbesondere Di- oder Polyaminen mit 2 bis 4 primären und/oder sekundären Aminogruppen, wobei die genannten Amine bzw. Di- oder Polyamine zusätzlich auch tertiär oder quartär substituierte N-Atome und/oder weitere Substituenten enthalten können, darstellbar sind.

Eine bevorzugte Ausführungsfrom der Erfindung besteht ferner darin, daß das erfindungsgemäße Dispergiermittel Verbindungen enthält, die durch Addition von vier blockcopolymer strukturierten Resten aus x Ethylenoxid-und y Propylenoxid-Einheiten oder x Propylenoxid- und y Ethylenoxid-Einheiten, wobei x und y in den blockcopolymer strukturierten Resten die Bedeutungen wie in Formel Z haben, an die Aminogruppen des Ethylendiamins darstellbar sind.

Die erfindungsgemäßen Dispergiermittel haben eine gute bis hervorragende Dispergierwirkung. Die erfindungsgemäß dispergierten anorganischen Teilchen liegen im Schlicker als Primärteilchen vor, die auch beim Trocknen des Schlickers nicht vorzeitig aggregieren und die beim Gießen nicht oder nur wenig orientiert werden, so daß isotrope Grünfolien mit optimaler Dichte und damit optimaler Packungsdichte der anorganischen Teilchen erhalten werden.

Im Gegensatz zu den meisten für die Herstellung keramischer Schlicker bekannten Dispergiermitteln sind die erfindungsgemäßen Verbindungen mit Polyvinylbutyral und den üblichen Lösungsmitteln und Weichmachern verträglich, so daß die pigmentfreie organische Phase völlig klare Filme ergibt.

Ferner erniedrigen die erfindungsgemäßen Dispergiermittel die Haftung der Grünfolien auf dem Gießband, so daß beim Abziehen der Folien kein Verziehen oder Dehnen auftritt.

Auf Grund der geschilderten Eigenschaften gelingt es bei Verwendung der erfindungsgemäßen Dispergiermittel, Grünfolien herzustellen, die eine niedere Schwindung aufweisen bei ungewöhnlich geringer Differenz zwischen Längs- und Querschwindung. Dadurch gelingt es, durch das Gießverfahren Substrate mit ungewöhnlich genauer Dimensionierung reproduzierbar herzustellen.

Bei den erfindungsgemäß zu verwendenden Dispergiermitteln handelt es sich insbesondere um bekannte Verbindungen mit einer oder mehreren der Struktureinheiten

$> N-(C_2H_4O)_x-(C_3H_6O)_yH$ und
$> N-(C_3H_6O)_x-)C_2H_4O)_yH$,

worin x und y jeweils die Bedeutungen wie in Formel Z haben.

Prinzipiell sind alle blockartigen bzw. blockcopolymeren Addukte von Propylenoxid und Ethylenoxid an beliebige primäre und/oder sekundäre Amine geeignet. Vorzuziehen sind jedoch die Addukte an primäre und sekundäre aliphatische Mono-, Di- und Polyamine, wie z.B. Ethyl-, Butyl-, Octyl-, Dodecyl-, Stearyl- und Oleylamin, Diethylamin, Methylstearylamin, Ethylendiamin, 1,6-Hexylendiamin, Diethylentriamin und Triethylentetramin.

Besonders bevorzugt sind die Addukte an Ethylendiamin der Formel $Z^3$,

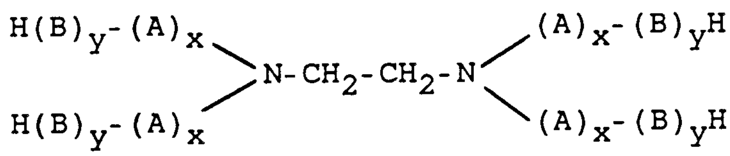

$(Z^3)$

worin A, B, x und y die Bedeutungen wie in Formel Z haben.

Gegenüber der Herstellung von Keramikschlickern mit bekannten Dispergiermitteln haben die erfindungsgemäßen Dispergiermittel eine ganze Reihe von Vorteilen.

1. Sie haben eine sehr gute Dispergierwirkung und verhindern dadurch eine Agglomeration der anorganischen Pigmentprimärteilchen im Schlicker.
2. Sie sind vertraglich sowohl mit Polyvinylbutyral als auch mit den üblichen Weichmachern des Polyvinylbutyrals. In den homogenen Systemen Polyvinylbutyral/Weichmacher/Dispergiermittel haben sie daher eine zusätzlich weichmachende Wirkung, so daß die Konzentration an üblichem Weichmacher vermindert werden kann. Dies begünstigt wiederum das Trocknen der Grünfolie und das Ausheizen der organischen Bestandteile der Grünfolie.
3. Sie vermindern die Haftung der Grünfolie auf beliebigen Unterlagen.
4. Sie vermindern die Neigung zur Schaumbildung im Schlicker.
5. Sie ermöglichen die Verbesserung und Sicherstellung der Homogenität der Grünfolie.
6. Sie ermöglichen die kombinierte Verbesserung von Dispergier-, Antihaft- und Antischaumwirkung.

Diese Kombination von Vorteilen mit einer einzigen Substanzklasse realisieren zu können, ist außerordentlich überraschend und war für den Fachmann nicht vorhersehbar. Die genannten Vorteile - Dispergierwirkung, Verträglichkeit, Antihaft- und Antischaumwirkung - sind bei den einzelnen Vertretern der erfindungsgemäß zu beanspruchenden Verbindungen unterschiedlich stark ausgeprägt. Im allgemeinen kann ganz grob die Regel angewandt werden, daß die beste Dispergierwirkung dann erreicht wird, wenn Oxypropylenblöcke außen am Molekül sitzen (B in obiger Formel $Z^3$) und verhältnißmäßig groß sind. Umgekehrt haben Verbindungen mit außen am Molekül sitzenden Oxyethylenblöcken eine besonders gute Antihaft- und Antischaumwirkung. Es ist daher eine bevorzugte Ausführungsform der Erfindung, zwei oder mehr erfindungsgemäße Verbindungen mit unterschiedlich ausgeprägten Wirksamkeiten, beispielsweise Dispergier- und Antihaftwirkung, miteinander zu kombinieren.

Die Konzentration der erfindungsgemäß zu verwendenden Verbindungen kann in weiten Grenzen variieren. Prinzipiell ist es wünschenswert, so wenig Dispergiermittel wie möglich zu verwenden, um das Gießen und Trocknen des Schlickers nicht zu behindern. Andererseits ist es erforderlich, die anorganischen

Teilchen vollstandig und optimal zu dispergieren, was wiederum von ihrer Art und ihrer Größe bzw. ihrer Oberfläche abhängt. Ähnliches gilt für die erforderliche Erniedrigung der Haftung der Grünfolie auf dem Gießband. Schließlich muß auch, wie erwähnt, auf die Verträglichkeit des gesamten Bindemittelsystems geachtet werden. Die optimale Konzentration an Dispergiermittel kann jedoch vom Fachmann an Hand der erwähnten Regeln und der unten beschriebenen Testmethoden ermittelt werden. Im allgemeinen werden die erfindungsgemäßen Dispergiermittel bzw. Dispergiermittelgemische in Konzentrationen zwischen 0,1 und 10 Gew.-%, bezogen auf das anorganische Pigment, verwendet. Ein bevorzugter Bereich liegt zwischen 0,2 und 5 Gew.-%. Besonders bevorzugt sind Konzentrationen zwischen 0,4 und 3 Gew.-%.

Als Bindemittel können die handelsüblichen Polyvinylbutyrale verwendet werden. Diese Polyvinylbutyrale haben Viskositäten, gemessen an ihren 5 gew.-%igen Lösungen in Ethanol bei 23 °C, zwischen 3 und 100 mPa•s. Vorzugsweise geeignet sind Polyvinylbutyrale oder auch Polyvinylbutyralgemische mit Viskositäten zwischen 5 und 20 mPa•s. Die handelsüblichen Polyvinylbutyrale sind Terpolymere, welche neben Vinylbutyraleinheiten ca. 0,5 bis 3 Gew.-% Vinylacetat- und 12 bis 28 Gew.-% Vinylalkoholeinheiten enthalten. Besonders die Vinylalkoholeinheiten haben einen wesentlichen Einfluß auf die Löslichkeit, die mechanischen und die rheologischen Eigenschaften der Polyvinylbutyrale. Bei der vorliegenden Anwendung sind die Verträglichkeit mit Weichmacher und Dispergiermittel einerseits und die mechanischen Eigenschaften andererseits von besonderer Bedeutung. Für eine optimale Einstellung dieser Eigenschaften sind Polyvinylbutyrale mit einem Gehalt an Vinylalkoholeinheiten zwischen 15 und 22 Gew.-% besonders bevorzugt.

Die Konzentration an Bindemittel hat einen wesentlichen Einfluß auf die Festigkeit und die Verarbeitbarkeit der Grünfolien. Folien mit zu wenig Bindemittel sind wenig fest und sind brüchig, zuviel Bindemittel erschwert das Ausheizen der organischen Bestandtiele aus der Grünfolie und kann zur Rißbildung im Substrat führen. Im allgemeinen werden Polyvinylbutyralkonzentrationen zwischen 2 und 10 Gew.-%, bezogen auf die anorganischen Pigmente, eingesetzt. Ein bevorzugter Bereich liegt zwischen 3 und 6 Gew.-%.

Bei der Herstellung von Grünfolien mit Polyvinylbutyral als Bindemittel kann auf die Anwesenheit eines Weichmachers nicht verzichtet werden. Weichmacherfreie Grünfolien sind zu wenig flexibel und sind brüchig.

Das Verhältnis Weichmacher/Bindemittel bestimmt die Flexibilität der Folie. Zunehmende Weichmacherkonzentrationen verbessern die Dehnbarkeit der Folie, mit abnehmendem Weichmachergehalt nimmt die Festigkeit zu. Voraussetzung ist allerdings, daß es sich um ein homogenes, d.h. einphasiges Weichmacher/Bindemittelsystem handelt. Es sind prinzipiell alle Weichmacher geeignet, welche diese Forderung erfüllen, d.h. welche mit Polyvinylbutyral verträglich sind. Besonders geeignet sind beispielsweise Ester von Dicarbonsäuren, wie Phthalsäure, Adipinsäure und Sebazinsäure, mit aliphatischen oder aliphatisch-aromatischen Alkoholen, wie Dibutyl-, Dihexyl- oder Dioctylphthalat, Butylbenzylphthalat, Dioctyladipat oder Dibutylsebazat, ferner gegebenenfalls die entsprechenden Ester der Phosphorsäure. Weiterhin geeignet sind Ester von Monocarbonsäuren mit mehrwertigen Alkoholen, wie z.B. die Ester des Triethylenglykols mit aliphatischen Monocarbonsäuren mit 6 bis 8 Kohlenstoffatomen. Außerdem sind Ether langkettiger Alkohole geeignet, wie beispielsweise der Mono-isotridecylether des Triethylenglykols.

Da sie mit Polyvinylbutyral verträglich sind, wirken auch die erfindungsgemäß zu verwendenden Dispergiermittel prinzipiell als Weichmacher, welche geeignet sind, die Flexibilität der Grünfolien zu erhöhen. Aus diesem Grund kann auch das Dispergiermittel die oben erwähnten nicht dispergierenden Weichmacher zumindest teilweise ersetzen. Die Konzentration an nicht dispergierendem Weichmacher liegt daher zwischen 0 und 200 Gew.-% bezogen auf das eingesetzte Polyvinylbutyral. Ein bevorzugter Bereich liegt zwischen 10 und 150 Gew.-%, wobei die Obergrenze der Weichmacherkonzentration durch die beginnende Unverträglichkeit gesetzt wird.

Für die Herstellung des Schlickers werden die üblichen Lösungsmittel verwendet. Es sind dies insbesondere Alkohole, wie Methanol und Ethanol, Halogenkohlenwasserstoffe wie Trichlorethylen, Ketone wie Methylethylketon oder Methylisobutylketon, aromatische Kohlenwasserstoffe wie Toluol oder Xylol. Häufig werden auch Gemische dieser Lösungsmittel verwendet.

Das Lösungsmittel beeinflußt in erster Linie die Viskosität des Schlickers und die Trocknungsgeschwindigkeit der Grünfolie. Die Konzentration des Lösungsmittels ist nicht kritisch und liegt innerhalb der üblichen Grenzen, vorzugsweise zwischen 20 und 100 Gew.-Teilen Lösungsmittel, insbesondere 30 bis 50 Gew.-Teilen, pro 100 Gew.-Teile anorganisches Pigment.

Prinzipiell können bei dem erfindungsgemäßen Verfahren sämtliche Pigmente verwendet werden, die sich für das Gießverfahren eignen. Sie können für den erfindungsgemäßen Verwendungszweck auf beliebige Weise hergestellt oder weiterverarbeitet worden sein, z.B. durch trockene oder nasse Mahlung. Für die Herstellung eines leicht dispergierbaren anorganischen Pigments kann es allerdings vorteilhaft sein,

wenn z.B. nach einer Naßmahlung das Pigment in Gegenwart eines erfindungsgemäß zu verwendenden Dispergiermittels getrocknet wird.

Wie schon erwähnt, sind viele feinteilige anorganische Pigmentpulver geeignet, wie z.B. die Oxide des Aluminiums, Magnesiums und Siliciums, Bariumtitanat, Silizium, Siliziumcarbid, Quarze, Alumosilikate, Gemische solcher Produkte und andere. Besonders eignen sich die erfindungsgemäß zu verwendenden Dispergiermittel bei der Herstellung von Substraten auf Basis Aluminiumoxid.

Neben den genannten Bestandteilen kann der Schlicker noch andere Zusätze enthalten, wie Verlaufmittel und Stabilisatoren, die wie die anderen im Schlicker enthaltenen organischen Verbindungen mit dem Bindemittelsystem verträglich sein sollten. Es ist aber auch möglich, andere organische Verarbeitungshilfsmittel einzusetzen, die mit der organischen Phase nicht verträglich sind und die feinteilig und inert in die Grünfolie eingelagert werden. Solche Zusätze, z.B. sogenannte Verflüssiger wie Fischöl oder andere Fettsäureester, können die Verflüssigung des Schlickers bei der Herstellung erleichtern. Sie dürfen aber die Kontinuität der Bindemittelphase nicht stören und die Dispergierwirkung der erfindungsgemäßen Verbindungen nicht beeinträchtigen. Ihre Konzentration, bezogen auf das eingesetzte Pigment, sollte daher gegebenenfalls 2 Gew.-%, vorzugsweise 1 Gew.-%, nicht überschreiten.

Die Herstellung und Verarbeitung der Schlicker erfolgt nach üblichen Methoden, z.B. durch Vermahlen des auf übliche Weise vorbehandelten und gegebenenfalls zerkleinerten Pigments in organischen Lösungsmitteln, wobei Bindemittel, Weichmacher, Dispergiermittel und andere Zusätze in beliebiger Reihenfolge zugegeben werden können. Vorzuziehen ist allerdings eine frühe Zugabe des Dispergiermittels und gegebenenfalls des Verflüssigers sowie eine relativ späte Zugabe des Bindemittels. Der fertige Schlicker wird mit Hilfe eines Gießschuhs und einer Rakel auf ein kontinuierlich laufendes Band aufgetragen, getrocknet und abgezogen. Anschließend kann die Grünfolie auf übliche Weise weiterverarbeitet werden. Beispielsweise kann die Aluminiumoxidgrünfolie zur Herstellung von Leiterbahnen, Isolatoren, Trägern für Siliziumchips, Trägern für elektronische Schaltkreise etc. verwendet werden.

Zur Charakterisierung des organischen Bindemittelsystems eignen sich verschiedene Testmethoden, die im folgenden unter A) bis G) beschrieben sind.

A) Überprüfung der Homogenität des organischen Bindemittelsystems.

Die organischen Komponenten werden in der für die Schlickerherstellung vorgesehenen Zusammensetzung mit 0,2 mm Naßfilmdicke auf eine saubere Glasplatte aufgerakelt. Nach einer Trockenzeit von mindestens 24 Stunden bei Zimmertemperatur wird der Film bei ca. 200-facher Vergrößerung bei seitlicher Lichteinstrahlung unter dem Mikroskop betrachtet. Es darf (in Abwesenheit der oben als Verflüssiger erwähnten inerten Zusätze) keine Abscheidung einer zweiten Phase erkennbar sein. Wird der Film zu einer Schlaufe gefaltet und bei 23 °C bei 100 % relativer Luftfeuchtigkeit 3 Tage gelagert, so sollte auf der Innenseite der Schlaufe keine Abscheidung erkennbar sein.

B) Prüfung des Dispergiervermögens.

Das Dispergiervermögen eines Dispergiermittels wird ebenfalls in der organischen Lösung ermittelt, die für die Schlickerherstellung verwendet werden soll - allerdings in Abwesenheit des Bindemittels. In der organischen Lösung werden 0,1 Gew.-Teile Pigment mit einer mittleren Teilchengröße von ca. 0,5 µm und enger Korngrößenverteilung (z.B. Kronos Titandioxid RN 56) in 10 Gew.-Teilen Lösung in Gegenwart von Glasperlen 3 Stunden heftig geschüttelt. Je langsamer sich das dispergierte Pigment absetzt, um so besser ist die Dispergierwirkung. Die Dispergierwirkung ist befriedigend, wenn sich das Pigment nach 20 Stunden Stehen nur teilweise absetzt, sie ist gut, wenn sich in dieser Zeit nur eine geringe Menge des Pigments abgesetzt hat. Wird eine verdünnte Pigmentaufschlämmung unter dem Mikroskop betrachtet, nachdem sie in der beschriebenen Weise hergestellt worden ist, so dürfen keine oder nur wenige Pigmentaggregate erkennbar sein.

Indirekt läßt sich eine gute Dispergierwirkung auch bei der Herstellung der Substrate feststellen. Enthalten zwei Grünfolien die gleichen anorganischen Bestandteile und die gleiche Menge unterschiedlicher Bindemittelsysteme, so hat die Folie mit besserer Dispergierung eine höhere Dichte und eine geringere Schwindung beim Sintern zum Substrat als die Folie mit weniger gut dispergierten anorganischen Teilchen.

C) Prüfung des Haftvermögens.

Wie bei der Überprüfung der Homogenität (Testmethode A) wird ein Film auf eine saubere Glasplatte (Objektträger) aufgerakelt und 24 Stunden getrocknet. Die Haftung ist "sehr gering", wenn sich der Film mit

einer Pinzette von einem Objektträger, der eine Abmessung von ca. 25x76x1 mm aufweist und mit seiner Rückseite lose auf einer Unterlage aufliegt, abziehen läßt, ohne daß der Objektträger angefaßt werden muß. "Gering" ist die Haftung, wenn das Abziehen eines 6 cm breiten Films von einer Glasplatte mit der Abmessung 100x300x3 mm in entsprechender Weise gelingt. "Maßig" ist die Haftung, wenn beim Abziehen die Glasplatte angefaßt werden muß, der Film dabei aber nicht stark gedehnt wird. "Hoch" ist die Haftung, wenn der Film gedehnt wird und "sehr hoch", wenn sich der Film nicht unbeschädigt abziehen läßt.

Wird eine Grünfolie mit 200 µm Naßfilmdicke auf eine saubere Glasplatte aufgerakelt, so läßt sie sich nach dem Trocknen "leicht" abziehen, wenn dies mühelos gelingt, ohne daß die Folie an irgendeiner Stelle einreißt.

D) Prüfung der Viskosität.

Die Viskositätsmessung des Schlickers oder der organischen Lösungen kann mit üblichen Viskosimetern des Systems Höppler oder des Systems Brookfield vorgenommen werden.

E) Prüfung von Festigkeit und Dehnung.

Auch die Prüfung von Zugfestigkeit und Zugdehnung von pigmentfreien Folien und von Grünfolien kann mit handelsüblichen Maschinen vorgenommen werden. Zur Ausprüfung der Grünfolien wurde eine Maschine vom Typ Instron verwendet. Folienstreifen mit 0,5 bis 0,8 mm Dicke und 15 mm Breite wurden bei einer Einspannlänge von 50 mm mit einer Geschwindigkeit von 5 mm/min gerissen.

F) Prüfung auf Orientierung.

An pigmentfreien Folien oder an Filmen, die nur wenig, z.B. nicht mehr als 1 Gew.-%, Pigment enthalten, läßt sich eine Orientierung makroskopisch oder mikroskopisch durch Streifenbildung, Ausrichtung der Pigmente oder Bildung von in Gießrichtung ausgerichteten Strukturen erkennen. Bei Grünfolien ist eine entsprechende Untersuchung nicht aussagekräftig. An diesen Folien läßt sich die Orientierung am besten an der unterschiedlichen Schwindung längs und quer zur Gießrichtung beim Brennen der Grünfolie und Sintern zum Substrat erkennen.

G) Prüfung des Schaumverhaltens.

Die Neigung zur Schaumbildung im organischen Bindemittelsystem läßt sich am besten in Abwesenheit von anorganischen Pigmenten ermitteln. Es wird dabei eine Probe definiert geschüttelt und das Zusammenfallen des an der Oberfläche gebildeten Schaums im Vergleich zu einer Standardprobe beobachtet.

Die Erfindung wird durch die nachfolgenden Beispiele näher erläutert.

**Beispiel 1**

Es wurde eine Lösung aus 10 Gew.-Teilen Polyvinylbutyral, 61,5 Gew.-Teilen Trichlorethylen, 25 Gew.-Teilen wasserfreiem Ethanol und 3,5 Gew.-Teilen Bis-2-ethylhexylphthalat (DOP) hergestellt. Das verwendete Polyvinylbutyral hatte einen Gehalt an Vinylalkoholeinheiten von 18 Gew.-% und eine Viskosität von 12 mPa•s, gemessen an einer 5 gew.-%igen Lösung in Ethanol bei 23 °C. Zu jeweils 10 g dieser Lösung wurden jeweils 0,15 g eines der in Tabelle 1 angegebenen Dispergiermittel der Substanzklassen der Formel I bzw. II (= Dispergiermittel a) bzw. b)), worin x und y die in Tabelle 1 angegebenen Zahlen bedeuten, zugesetzt. In Fläschchen wurden die Lösungen 5 Minuten heftig geschüttelt und die Schaumbildung,wie vorstehend unter Testmethode G) beschrieben, beurteilt. Außerdem wurden die Lösungen mit 200 µm Naßfilmdicke auf Glasplatten aufgerakelt. Die getrockneten Filme wurden unter dem Mikroskop, wie vorstehend unter Testmethode A) beschrieben, auf Homogenität geprüft. Die Versuchsergebnisse sind der folgenden Tabelle 1 zu entnehmen.

**Tabelle 1**

a) Dispergiermittel der Formel I:

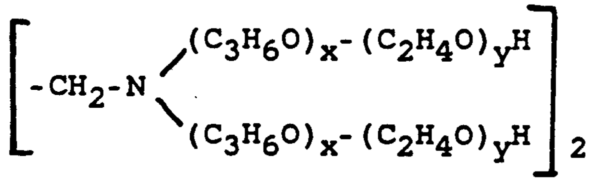

b) Dispergiermittel der Formel II:

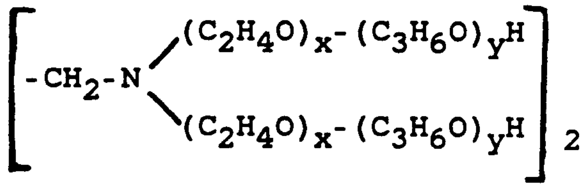

| Versuch Nr. | Dispergiermittel | x | y | Homogenität des aus dem org. Bindemittelsystem hergest. Films | Schaumbildung des flüssigen org. Bindemittelsystems |
|---|---|---|---|---|---|
| 1 | a) | 12 | 7 | homogen | gering |
| 2 | a) | 15 | 2,5 | homogen | sehr gering |
| 3 | a) | 25 | 7 | homogen | sehr gering |
| 4 | a) | 30 | 4 | homogen | sehr gering |
| 5 | a) | 30 | 15 | homogen | gering |
| 6 | b) | 15 | 7,5 | homogen | gering |
| 7 | b) | 7,5 | 7,5 | homogen | sehr gering |

**Vergleichsbeispiel 1**

Beispiel 1 wurde wiederholt mit der Abänderung, daß anstelle der erfindungsgemäßen Dispergiermittel a) bzw. b) die in Tabelle 1a) angegebenen üblichen Zusatzmittel eingesetzt wurden. Die Prüfungen erfolgten analog Beispiel 1. Die Versuchsergebnisse sind der folgenden Tabelle 1a) zu entnehmen.

Tabelle 1a

| Versuch Nr. | Zusatzmittel | Homogenität des aus dem org. Bindemittelsystem hergest. Films | Schaumbildung des flüssigen org. Bindemittelsystems |
|---|---|---|---|
| 1 | Menhaden-Fischöl | Abscheidung von Tröpfchen | gering |
| 2 | $C_4H_9O(C_3H_6O)_{12}H$ | Abscheidung von Tröpfchen | gering |
| 3 | $HO(C_2H_4O)_4-(C_3H_6O)_8-(C_2H_4O)_4H$ | homogen | stark |

Das Beispiel 1 zeigt, daß die erfindungsgemäßen Dispergiermittel mit Polyvinylbutyral und Weichmacher verträglich sind und wenig Schaumbildung hervorrufen, während die bekannten Zusatzmittel gemäß Vergleichsbeispiel 1 zu Nachteilen führen.

**Beispiel 2**

Es wurden jeweils 0,1 Gew.-Teile des Pigments Kronos Titandioxid RN 56 wie vorstehend unter Testmethode B) angegeben in jeweils 10 Gew.-Teilen einer Lösung aus 68 Gew.-Teilen Trichlorethylen, 27,5 Gew.-Teilen wasserfreiem Ethanol und 4,5 Gew.-Teilen DOP dispergiert, wobei zu jeweils 10 Gew.-Teilen der Lösung die in Tabelle 2 angegebenen unterschiedlichen Mengen der in Tabelle 2 ebenfalls genannten Dispergiermittel zugesetzt wurden. Als Dispergiermittel wurden die in Beispiel 1 beschriebenen erfindungsgemäßen Dispergiermittel a) (= Dispergiermittel der Formel I) bzw. b) (= Dispergiermittel der Formel II) verwendet, wobei x und y in Formeln I und II die in Tabelle 2 angegebenen Zahlen bedeuten. Die Dispergierwirkung wurde aus Absetzgeschwindigkeit und Beobachtung der Aggregatbildung, wie vorstehend unter Testmethode B) angegeben, beurteilt. Die Versuchsergebnisse sind der folgenden Tabelle 2 zu entnehmen.

Tabelle 2

| Versuch Nr. | Dispergiermittel | x | y | Dispergierwirkung bei | |
|---|---|---|---|---|---|
| | | | | 0,1 Gew.-Teilen | 0,2 Gew.-Teilen |
| | | | | Dispergiermittelzusatz | |
| 1 | a) | 12 | 7 | befriedigend | gut |
| 2 | a) | 25 | 13 | befriedigend | befriedigend |
| 3 | a) | 25 | 25 | befriedigend | gut |
| 4 | a) | 30 | 4 | noch befriedigend | befriedigend |
| 5 | b) | 15 | 7,5 | gut | gut |
| 6 | a) + b) | a) 30<br>b) 15 | a) 4<br>b) 7,5 | gut | gut |
| 7 | Ohne Dispergiermittelzusatz | | | keine | keine |

**Vergleichsbeispiel 2**

Beispiel 2 wurde wiederholt mit der Abänderung, daß anstelle der erfindungsgemäßen Dispergiermittel a) bzw. b) die in Tabelle 2a) angegebenen und zur Beeinflussung der Dispergierung üblichen Zusatzmittel eingesetzt wurden. Die Prüfungen erfolgten analog Beispiel 2. Die Versuchsergebnisse sind der folgenden Tabelle 2a) zu entnehmen.

**Tabelle 2a)**

| Versuch Nr. | Dispergiermittel | Dispergierwirkung bei 0,1 Gew.-Teilen Dispergiermittelzusatz | Dispergierwirkung bei 0,2 Gew.-Teilen Dispergiermittelzusatz |
|---|---|---|---|
| 1 | $C_4H_9O(C_3H_6O)_{12}H$ | schlecht | schlecht |
| 2 | $C_{13}H_{27}O(C_2H_4O)_3H$ | schlecht | schlecht |
| 3 | 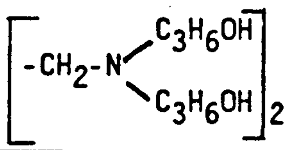 | schlecht | schlecht |

Das Beispiel 2 zeigt, daß die erfindungsgemäßen Dispergiermittel, vergleichsweise zu üblichen Dispergiermitteln auf der Basis von Ethylenoxid- bzw. Propylenoxidaddukten des Vergleichsbeispiels 2, eine überlegene Dispergierwirkung besitzen.

**Beispiel 3**

Aus 10 Gew.-Teilen Polyvinylbutyral, 60,5 Gew.-Teilen Trichlorethylen, 24,5 Gew.-Teilen wasserfreiem Ethanol, 1,0 Gew.-Teilen Methoxypropylacetat und 4,0 Gew.-Teilen Dibutylphthalat wurde eine Lösung hergestellt. Das verwendete Polyvinylbutyral hatte einen Anteil von 19,2 Gew.-% Vinylalkoholeinheiten und eine Viskosität von 9,5 mPa•s, gemessen in 5 gew.-%iger Lösung in Ethanol bei 23 °C. Zu jeweils 10 g dieser Lösung wurden jeweils 0,1 g eines der in Tabelle 1 angegebenen Dispergiermittel a) bzw. b) der Substanzklassen der Formel I bzw. II (= Dispergiermittel a) bzw. b)), worin x und y die in Tabelle 3 angegebenen Zahlen bedeuten, oder eine Kombination der Dispergiermittel a) und b) zugesetzt. Von den resultierenden Lösungen wurden, wie in Beispiel 1 angegeben, Filme hergestellt. Die Haftung dieser Filme auf Glas wurde, wie vorstehend unter Testmethode C) beschrieben, ermittelt. Die Ergebnisse dieser Versuche sind der folgenden Tabelle 3 zu entnehmen.

Tabelle 3

| Versuch Nr. | Dispergiermittel | x | y | Haftung des aus dem org. Bindemittelsystem hergest. Films auf Glas |
|---|---|---|---|---|
| 1 | a) | 12 | 2 | gering |
| 2 | a) | 12 | 7 | mäßig |
| 3 | a) | 25 | 7 | sehr gering |
| 4 | a) | 30 | 4 | sehr gering |
| 5 | b) | 15 | 7,5 | gering bis mäßig |
| 6 | a) + b) | a) 30<br>b) 15 | a) 4<br>b) 7,5 | sehr gering |

**Vergleichsbeispiel 3**

Beispiel 3 wurde wiederholt mit der Abänderung, daß anstelle der erfindungsgemäßen Dispergiermittel a) bzw. b) die in Tabelle 3a) angegebenen und zur Beeinflussung der Dispergierung üblichen Zusatzmittel eingesetzt wurden. Die Prüfungen erfolgten analog Beispiel 3. Die Versuchsergebnisse sind der folgenden Tabelle 3a) zu entnehmen.

**Tabelle 3a)**

| Versuch Nr. | Dispergiermittel | Haftung des aus dem org. Bindemittelsystem hergest. Films auf Glas |
|---|---|---|
| 1 | 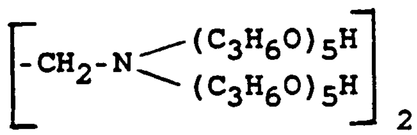 | hoch |
| 2 | 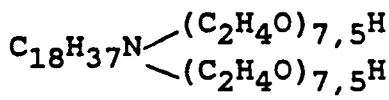 | hoch |
| 3 | ohne Dispergiermittelzusatz | sehr hoch |

Das Beispiel 3 demonstriert die haftungserniedrigende Wirkung erfindungsgemäßer Dispergiermittel gegenüber üblicherweise als Dispergiermittel eingesetzten Vergleichssubstanzen des Vergleichsbeispiels 3.

**Beispiel 4**

Es wurde eine Lösung von 4,5 Gew.-Teilen Polyvinylbutyral (Zusammensetzung wie in Beispiel 3), 0,5 Gew.-Teilen Menhaden-Fischöl, 1,7 Gew.-Teilen Dioctylphthalat und 2,3 Gew.-Teilen Dibutylphthalat in 30 Gew.-Teilen Toluol und 10 Gew.-Teilen wasserfreiem Ethanol hergestellt. Die Lösung wurde mit 200 µm Naßfilmdicke auf eine Glasplatte aufgerakelt. Der getrocknete Film haftete sehr stark auf der Glasplatte. Wurden dagegen derselben Lösung 0,8 Gew.-Teile des erfindungsgemäßen Dispergiermittels a) der Formel I mit x = 30 und y = 4 (vgl. Tabelle 1) zugesetzt, so war die Haftung eines auf dieselbe Weise hergestellten Films auf Glas gering.

**Beispiel 5**

Es wurden zwei Polymerlösungen jeweils aus Polyvinylbutyral, Trichlorethylen, Ethanol und Dioctylphthalat wie in Beispiel 1 beschrieben hergestellt. Eine der Lösungen wurde entsprechend dem Stand der Technik mit 1,7 Gew.-% (bezogen auf die Lösung) eines statistischen Copolymeren aus Ethylenoxid und Propylenoxid mit dem Molekulargewicht 3200 sowie mit 2,5 Gew.-% eines Fettsäureesters (Loxiol G 70 der Firma Henkel) versetzt (= Versuch 1). Der zweiten Lösung wurde das in Tabelle 1 beschriebene erfindungsgemäße Dispergiermittel b) der Formel II mit x = 15 und y = 7,5 zugesetzt (= Versuch 2). Zu beiden Lösungen wurden außerdem 3 Gew.-% feinteiliges Aluminiumoxid zugegeben, welches durch Versprühen aus wäßriger Aufschlämmung getrocknet worden war. Beide Lösungen wurden 20 Stunden in einer Kugelmühle gemahlen.

Schließlich wurden mit 50 µm Naßfilmdicke Filme auf Glas aufgezogen und bei 200-facher Vergrößerung unter dem Mikroskop betrachtet. FIGUR 1 zeigt einen Film nach dem Stand der Technik (= Versuch 1) mit stark inhomogener Verteilung der Aluminiumoxidpartikel in dem Bindemittelfilm. Der erfindungsgemäß hergestellte Film (= Versuch 2) demonstriert, wie die FIGUR 2 zeigt, die überlegene Dispergierwirkung erfindungsgemäßer Dispergiermittel, da er eine völlig homogene Verteilung der Aluminiumoxidpartikel in dem Bindemittelfilm aufweist.

**Beispiel 6**

100 Gew.-Teile Aluminiumoxid mit einer mittleren Teilchengröße von 2 µm wurden in 24 Gew.-Teilen Trichlorethylen, 10 Gew.-Teilen wasserfreiem Ethanol und 0,8 Gew.-Teilen des in Tabelle 1 beschriebenen erfindungsgemäßen Dispergiermittels b) der Formel II mit x = 15 und y = 7,5 20 Stunden in einer Kugelmühle gemahlen. Anschließend wurden 4 Teile Polyvinylbutyral der Spezifikation wie in Beispiel 1

beschrieben und 1,5 Teile Dioctylphthalat zugesetzt und das Gemisch noch weitere 6 Stunden gemahlen. Der resultierende Schlicker wurde auf eine Glasplatte gegossen und getrocknet, wobei eine flexible Grünfolie mit einer Dicke von 0,6 mm entstand. Die Folie konnte leicht von der Glasplatte abgezogen werden. Nach 3 Tagen Lagerung bei 23° C und 50 % relativer Feuchte hatte die Folie eine Reißfestigkeit von 2,1 N/mm$^2$ bei einer Reißdehnung von 10,5 %. Wurde bei dieser Rezeptur anstelle des erfindungsgemäßen Dispergiermittels b) der Formel II Menhaden-Fischöl verwendet, so ließ sich die resultierende Folie nur sehr schwer vom Glas abziehen. Bei einer Reißfestigkeit von ebenfalls 2,1 N/mm$^2$ hatte sie außerdem lediglich eine Reißdehnung von 7,6 %.

**Beispiel 7**

Durch Gießen auf ein Metallband nach üblichem Verfahren wurde eine Grünfolie hergestellt, die aus 100 Gew.-Teilen Aluminiumoxid (mittlere Teilchengröße 2 µm), 3,8 Gew.-Teilen Polyvinylbutyral (Spezifikation wie in Beispiel 3 beschrieben), 1,5 Gew.-Teilen DOP, 0,4 Gew.-Teilen des erfindungsgemäßen Dispergiermittels a) der Formel I mit x = 30 und y = 4, und 1,0 Gew.-Teilen des erfindungsgemäßen Dispergiermittels b) der Formel II mit x = 15 und y = 7,5 (vgl. Tabelle 1) bestand. Die Folie ließ sich leicht vom Band abziehen. Aus der Grünfolie wurde durch Brennen bei 1600° C ein Substrat hergestellt. Die dabei auftretende Schwindung lag längs zur Gießrichtung bei 17,1 % und quer zur Gießrichtung bei 17,0 %. Wurden die verwendeten erfindungsgemäßen Dispergiermittel a) und b) der Formeln I und II durch 0,4 Gew.-Teile Menhaden-Fischöl und 1,0 Gew.-Teile eines statistischen Ethylenoxid-Propylenoxid Copolymerisats mit einem Molekulargewicht von 4000 ersetzt, so haftete die dabei resultierende Folie deutlich stärker auf dem Gießband. Die Schwindung beim Brennen zum Substrat lag bei 19,2 % (längs) und bei 18,1 % (quer). Die geringere, einheitlichere und weitgehend isotrope Schwindung der nach dem erfindungsgemäßen Verfahren hergestellten Folie demonstriert die bessere Dispergierung gegenüber dem Vergleichsversuch gemäß dem Stand der Technik.

**Patentansprüche**

1. Verfahren zur Herstellung von keramischen Grünfolien durch Vergießen und Trocknen eines Schlickers, der feinteiliges anorganisches Pigment, organische Lösungsmittel, Polyvinylbutyral, Weichmacher und Dispergiermittel enthält, dadurch gekennzeichnet, daß als Dispergiermittel Verbindungen eingesetzt werden, die in ihren Molekülen mindestens eine Struktureinheit der Formel Z,

   $$>N\text{-}(A)_x\text{-}(B)_yH \qquad (Z)$$

   worin A und B, die verschieden sein müssen, entweder für die Oxyalkyleneinheit $-C_{3-4}H_{6-8}O-$ oder die Oxyalkyleneinheit $-C_2H_4O-$ stehen und x und y, die gleich oder verschieden sein können, jeweils eine Zahl von 1 bis 200 bedeuten, enthalten.

2. Ausführungsform nach Anspruch 1, dadurch gekennzeichnet, daß die Struktureinheit der Formel Z den Formeln Z$^1$ und Z$^2$,

   $$>N\text{-}(C_2H_4O)_x\text{-}(C_3H_6O)_yH \qquad (Z^1)$$
   $$>N\text{-}(C_3H_6O)_x\text{-}(C_2H_4O)_yH \qquad (Z^2)$$

   worin x und y jeweils die Bedeutungen wie in Formel Z haben, entspricht.

3. Ausführungsform nach Anspruch 1 und/oder 2, dadurch gekennzeichnet, daß das Dispergiermittel Verbindungen enthält, die durch Addition von einem oder mehreren blockcopolymer strukturierten Resten aus x Ethylenoxid-und y Propylenoxid-Einheiten oder x Propylenoxid- und y Ethylenoxid-Einheiten, wobei x und y in den blockcopolymer strukturierten Resten die Bedeutungen wie in Formel Z haben, an die Aminogruppen von primären oder sekundären Aminen mit durch aliphatische ($C_1$-$C_{18}$)-Reste substituierten Amino-N-Atomen, bzw. von primären oder primären/sekundären oder sekundären Di- oder Polyaminen mit durch aliphatische ($C_1$-$C_{18}$)-Reste substituierten Amino-N-Atomen oder durch mehrbindige aliphatische ($C_1$-$C_{12}$)-Reste miteinander verbundenen Amino- N- Atomen, wobei die genannten Amine bzw. Di- oder Polyamine zusätzlich auch tertiär oder quartär substituierte N-Atome und/oder weitere Substituenten enthalten können, darstellbar sind.

**4.** Ausführungsform nach einem oder mehreren der Ansprüche 1 bis 3, dadurch gekennzeichnet, daß das Dispergiermittel Verbindungen enthält, die durch Addition von vier blockcopolymer strukturieren Resten aus x Ethylenoxid- und y Propylenoxid-Einheiten oder x Propylenoxid- und y Ethylenoxid-Einheiten, wobei x und y in den blockcopolymer strukturierten Resten die Bedeutungen wie in Formel Z haben, an die Aminogruppen des Ethylendiamins darstellbar sind.

**5.** Ausführungsform nach einem oder mehreren der Ansprüche 1 bis 4, dadurch gekennzeichnet, daß das Dispergiermittel in einer Menge von 0,1 bis 10 Gew.-%, bezogen auf das anorganische Pigment, eingesetzt wird.

**6.** Ausführungsform nach einem oder mehreren der Ansprüche 1 bis 5, dadurch gekennzeichnet, daß als anorganisches Pigment feinteiliges Aluminiumoxid eingesetzt wird.

**7.** Ausführungsform nach einem oder mehreren der Ansprüche 1 bis 6, dadurch gekennzeichnet, daß das eingesetzte Polyvinylbutyral einen Gehalt an Vinylalkoholeinheiten zwischen 15 und 22 Gew.-% aufweist.

**8.** Verwendung der Dispergiermittel nach einem oder mehreren der Ansprüche 1 bis 7 zur Herstellung eines keramischen Schlickers, Vergießen und Trocknen des Schlickers zu einer keramischen Grünfolie und nachfolgende Umwandlung der Grünfolie durch thermische Behandlung und Sinterung in ein keramisches Substrat.

**9.** Keramische Grünfolie, hergestellt nach einem oder mehreren der Ansprüche 1 bis 8.

**10.** Keramisches Substrat, hergestellt nach Anspruch 8 aus einer keramischen Grünfolie nach Anspruch 9, dadurch gekennzeichnet, daß es aus isotrop verteilten anorganischen Partikeln aufgebaut ist.

## Claims

**1.** A process for the production of a ceramic green films by casting and drying a slip containing finely divided inorganic pigment, organic solvents, polyvinylbutyral, plasticizer and dispersing agent, which comprises using compounds which contain in their molecules at least one structural unit of the formula Z

$$>N-(A)_x-(B)_yH \qquad (Z)$$

in which A and B, which must be different, stand for either the oxyalkylene unit $-C_{3-4}H_{6-8}O-$ or the oxyalkylene unit $-C_2H_4O-$ and x and y, which can be identical or different, each denote a number from 1 to 200, as dispersing agents.

**2.** An embodiment as claimed in claim 1, wherein the structural unit of the formula Z corresponds to the formula $Z^1$ or $Z^2$

$$>N-(C_2H_4O)_x-(C_3H_6O)_yH \qquad (Z^1)$$
$$>N-(C_3H_6O)_x-(C_2H_4O)_yH \qquad (Z^2)$$

in which x and y in each case have the meanings as in formula Z.

**3.** An embodiment as claimed in either of claims 1 and 2, wherein the dispersing agent contains compounds which can be prepared by addition of one or more radicals of block copolymer structure of x ethylene oxide units and y propylene oxide units or x propylene oxide units and y ethylene oxide units, x and y in the radicals of block copolymer structure having the meanings as in formula Z, onto the amino groups of primary or secondary amines, having amino-N atoms substituted by aliphatic ($C_1$-$C_{18}$)-radicals, or of primary or primary/secondary or secondary di- or polyamines, having amino-N atoms substituted by aliphatic ($C_1$-$C_{18}$)-radicals or amino-N atoms bonded to one another by multivalent aliphatic ($C_1$-$C_{12}$)-radicals, it also being possible for the amines or di- or polyamines mentioned additionally to contain tertiary- or quaternary-substituted N atoms and/or other substituents.

4. An embodiment as claimed in any one of claims 1 to 3, wherein the dispersing agent contains compounds which can be prepared by addition of four radicals of block copolymer structure of x ethylene oxide units and y propylene oxide units or x propylene oxide units and y ethylene oxide units, x and y in the radicals of block copolymer structure having the meanings as in formula Z, onto the amino groups of ethylenediamine.

5. An embodiment as claimed in any one of claims 1 to 4, wherein the dispersing agent is used in an amount of 0.1 to 10% by weight, based on the inorganic pigment.

6. An embodiment as claimed in any one of claims 1 to 5, wherein finely divided aluminum oxide is used as the inorganic pigment.

7. An embodiment as claimed in any one of claims 1 to 6, wherein the polyvinylbutyral used contains between 15 and 22% by weight of vinyl alcohol units.

8. The use of a dispersing agent as claimed in any one of claims 1 to 7 for the production of a ceramic slip, casting and drying of the slip to give a ceramic green film and subsequent conversion of the green film by heat treatment and sintering into a ceramic substrate.

9. A ceramic green film produced as claimed in any one of claims 1 to 8.

10. A ceramic substrate produced as claimed in claim 8 from a ceramic green film as claimed in claim 9, which is constituted by inorganic particles of isotropic distribution.

## Revendications

1. Procédé pour produire des feuilles vertes céramiques, par coulée et séchage d'une barbotine contenant un pigment minéral finement divisé, des solvants organiques, du polyvinylbutyral, des plastifiants et des dispersants, caractérisé en ce qu'on utilise comme dispersant des composés contenant dans leur molécule au moins un motif structural de formule Z

$$>N-(A)_x-(B)_yH \qquad (Z)$$

dans laquelle A et B, qui doivent être différents, représentent chacun un motif oxyde d'alkylène $-C_{3-4}H_{6-8}O-$ ou le motif oxyde d'alkylène $-C_2H_4O-$, et x et y, qui peuvent être identiques ou différents, représentent chacun un nombre de 1 à 200.

2. Forme de réalisation selon la revendication 1, caractérisée en ce que le motif structural de formule Z correspond aux formules $Z^1$ et $Z^2$

$$>N-(C_2H_4O)_x-(C_3H_6O)_yH \qquad (Z^1)$$
$$>N-(C_3H_6O)_x-(C_2H_4O)_yH \qquad (Z^2)$$

où x et y ont chacun les significations données pour la formule Z.

3. Forme de réalisation selon la revendication 1 et/ou 2, caractérisée en ce que le dispersant selon l'invention contient des composés pouvant être préparés par addition d'un ou plusieurs radicaux à structure de copolymère séquencé, constitués de x motifs oxyde d'éthylène et de y motifs oxyde de propylène ou de x motifs oxyde de propylène et de y motifs oxyde d'éthylène, x et y, dans les radicaux à structure de copolymère séquencé, ayant les significations données dans la formule Z, aux groupes amino d'amines primaires ou secondaires comportant des atomes d'azote d'amino substitués par des radicaux aliphatiques en $C_1$-$C_{18}$, ou encore de di- ou polyamines primaires ou primaires/secondaires ou secondaires comportant des atomes d'azote d'amino substitués par des radicaux aliphatiques en $C_1$-$C_{18}$, ou des atomes d'azote d'amino reliés les uns aux autres par des radicaux aliphatiques polyvalents en $C_1$ à $C_{12}$, les amines, ou encore les di- ou polyamines mentionnées ci-dessus, pouvant en outre aussi contenir des atomes d'azote à substitution tertiaire ou quaternaire et/ou d'autres substituants.

**4.** Forme de réalisation selon l'une ou plusieurs des revendications 1 à 3, caractérisée en ce que le dispersant contient des composés que l'on peut préparer par addition de quatre radicaux à structure de copolymère séquencé, constitués de x motifs oxyde d'éthylène et y motifs oxyde de propylène ou x motifs de propylène et y motifs oxyde d'éthylène, x et y, dans les radicaux à structure de copolymère séquencé, ayant les significations données pour la formule Z, sur les groupes amino de l'éthylènediamine.

**5.** Forme de réalisation selon l'une ou plusieurs des revendications 1 à 4, caractérisée en ce que le dispersant est utilisé en une quantité de 0,1 à 10 % en poids par rapport au pigment minéral.

**6.** Forme de réalisation selon l'une ou plusieurs des revendications 1 à 5,caractérisée en ce qu'on utilise comme pigment minéral de l'oxyde d'aluminium finement divisée.

**7.** Forme de réalisation selon l'une ou plusieurs des revendications 1 à 6, caractérisée en ce que le polyvinylbutyral utilisé contient de 15 à 22 % en poids de motifs alcool vinylique.

**8.** Utilisation des dispersants selon l'une ou plusieurs des revendications 1 à 7 pour préparer une barbotine céramique, pour couler et sécher la barbotine et obtenir de ce fait une feuille verte céramique, puis pour convertir la feuille verte, par traitement thermique et frittage, en un substrat céramique.

**9.** Feuille verte céramique, fabriquée selon l'une ou plusieurs des revendications 1 à 8.

**10.** Substrat céramique, fabriqué selon la revendication 8, à partir d'une feuille verte céramique selon la revendication 9, caractérisé en ce qu'il est constitué de particules minérales à répartition isotrope.

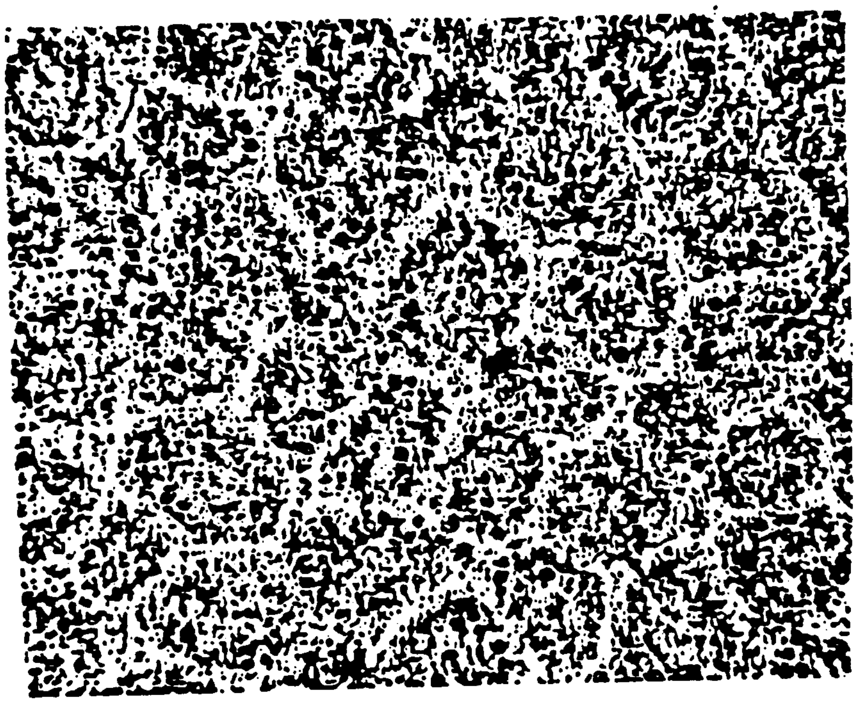

FIGUR 1

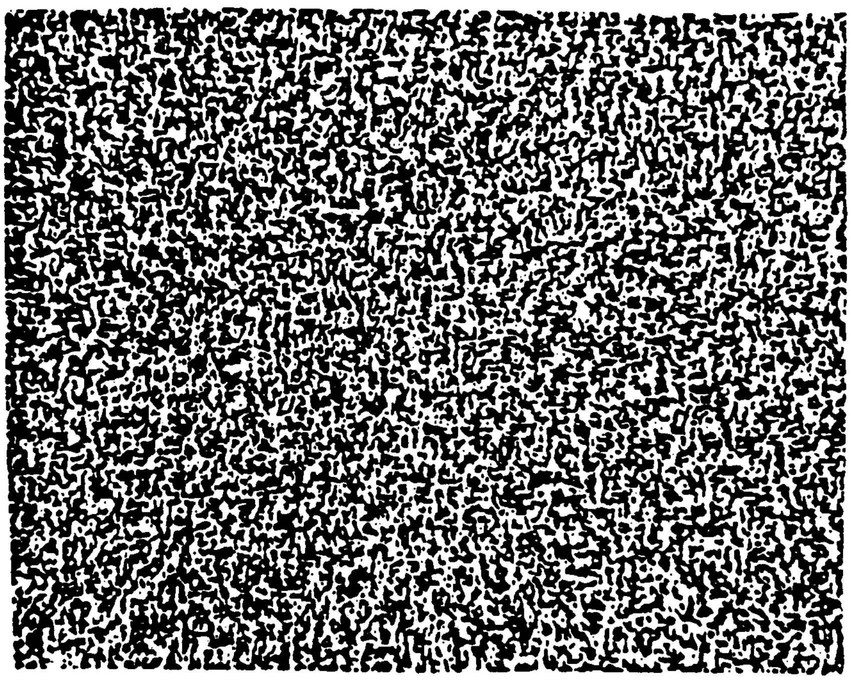

FIGUR 2